# FASCICULE DE BREVET EUROPEEN

(11) **EP 1 208 942 B1**
(45) Date de publication et mention de la délivrance du brevet: **08.10.2003**
(21) Numéro de dépôt: 01402917.7
(22) Date de dépôt: 14.11.2001
(51) Int. Cl.: B24B 39/00, B24B 1/04, B24B 41/06, C21D 7/06, B24C 1/10, B24C 5/08, F01D 5/28

(54) **Grenaillage des sommets des aubes refroidies**
Kugelstrahlen von gekühlten Laufschaufelspitzen
Peening of cooled turbine blade tip

(30) Priorité: 16.11.2000 FR 0014766
(43) Date de publication de la demande: 29.05.2002
(73) Titulaire: SNECMA MOTEURS, 75015 Paris (FR); Snecma Services, 75015 Paris (FR)
(72) Inventeur: Berthelet, Benoît Jean Henri, 94700 Maisons Alfort (FR); Chareyere, Francis Lucien Guy, 95130 Franconville (FR); Fradin, Willy Lionel, 86220 Vaux sur Vienne (FR); Hoffmann, Hakim, 86530 Naintre (FR); Kerneis, Stéphane Michel, 78140 Velizy (FR); Ntsama-Etoundi, Marie-Christine Marcelle, 94220 Charenton le Pont (FR); Simon, Guillaume François Roger, 78180 Montigny le Bretonneux (FR)

(56) Documents cités:
- EP-A- 1 101 568
- FR-A- 2 714 629
- US-A- 4 426 867
- US-A- 4 829 720

## Description

L'invention concerne un procédé de traitement de surface et de mise en précontrainte de compression par grenaillage des sommets et des parois aérodynamiques de têtes d'aubes refroidies comportant une cavité dans leur sommet, lesdites aubes étant creuses et comportant un circuit interne de refroidissement communiquant avec l'extérieur par des orifices de passage d'air de refroidissement ménagés notamment dans lesdits sommets et parois aérodynamiques. Un exemple d'un tel procédé est divulgué par US 4 426 867 A.

Une aube refroidie, de turbine de turboréacteur par exemple, est creuse et comporte sous le pied une ouverture importante par laquelle on injecte un débit d'air de refroidissement prélevé dans un étage de compresseur. La pale de l'aube comporte sur le bord d'attaque, sur le bord de fuite, sur les flancs et au sommet, de petits trous qui permettent l'évacuation de l'air de refroidissement réchauffé qui circule à l'intérieur de l'aube afin de le remplacer par de l'air de refroidissement frais et qui permettent l'amenée de cet air de refroidissement réchauffé sur la surface extérieure de l'aube l'isole des gaz de combustion du turboréacteur. Ces trous, qui peuvent être cylindriques ou se présenter sous la forme de fentes, ont des dimensions transversales relativement faibles, au plus égales à 1 mm. En outre, les surfaces aérodynamiques sont en général prolongées au sommet de l'aube par une paroi extérieure formant au sommet de l'aube une cavité ouverte vers le dessus.

Les aubes de turbine sont soumises en fonctionnement à des forces centrifuges considérables et à des contraintes thermiques importantes. Aussi est-il nécessaire de mettre en précontrainte de compression les surfaces externes des pales afin de retarder la naissance de criques préjudiciables à l'intégrité et à la durée de vie de ces aubes, et notamment les surfaces des extrémités des aubes qui sont soumises aux plus grandes forces centrifuges.

Cette mise en compression est également nécessaire pour les aubes dont les sommets ont été réparés. La réparation des sommets d'aubes consiste à recharger de métal par soudure les zones ébréchées, en pratique par soudure à l'arc électrique TIG. Ce rechargement est suivi :
- d'un usinage pour reconstituer la forme de l'aube, et
- d'un grenaillage par choc de billes pour mettre en compression la surface des zones rechargées et empêcher l'apparition de fissures au niveau des soudures lors des traitements thermiques ultérieurs et lors de l'exploitation de l'aube.

Lorsque le sommet de l'aube comporte une cavité ouverte vers le dessus, il faut grenailler également l'intérieur de la paroi délimitant cette cavité.

Actuellement, les surfaces des têtes d'aubes sont mises en précontrainte de compression par grenaillage au moyen de billes éjectées par des buses de grenaillage à jet d'air. Le brevet US 4,426,867 divulgue un procédé semblable consistant à exposer et à faire tourner la pale d'une aube dans un flux de billes. Ces buses ne peuvent projeter que des billes dont le diamètre est inférieur à 1 mm, et typiquement compris entre 0,1 et 0,5 mm. Il est donc nécessaire de boucher les trous de refroidissement de l'aube, avant le grenaillage, afin d'empêcher les billes d'y pénétrer. On présente ensuite le sommet de l'aube devant une ou plusieurs buses de grenaillage à jet d'air, et on déplace les buses pour uniformiser le grenaillage. Après l'opération de grenaillage, les trous de refroidissement doivent être débouchés.

On peut aussi ne pas obturer les trous pendant le grenaillage. Dans ce cas, il faut ensuite éliminer, par exemple par dissolution acide, les billes qui ont pu rester dans les trous de refroidissement ou pénétrer dans la cavité intérieure de l'aube.

Le grenaillage au moyen de buses demande un temps de réalisation important, car les billes étant de faible diamètre ont une énergie cinétique faible. En outre, le faible diamètre des billes entraîne une dégradation de l'état de surface de l'aube.

Pendant le grenaillage, il faut déplacer la buse selon différentes orientations, afin d'atteindre toute la paroi périphérique de l'extrémité de l'aube et également la paroi intérieure de la cavité ouverte vers le haut lorsqu'il y en a une. Lorsque le grenaillage est effectué à la main, il est par nature peu reproductible. Lorsque le grenaillage est automatisé, il nécessite le contrôle de nombreux paramètres et il est de ce fait difficilement contrôlable et reproductible.

Il est également connu de réaliser le grenaillage au moyen de fléaux équipés de billes. Ce procédé dit "grenaillage papillote" ou *"flapper peening"* consiste à utiliser une petite broche comportant à son extrémité des languettes de plastique, à l'extrémité desquelles on a collé des billes. On effectue le grenaillage en mettant la broche en rotation. Comme les billes sont retenues sur les languettes, elles ne pénètrent pas par les trous de refroidissement. L'inconvénient de ce procédé est que l'outil se dégrade rapidement par arrachement des billes et effilochage des languettes, et que surtout on ne peut pas grenailler efficacement l'intérieur de la cavité ouverte au sommet de l'aube.

Le but de l'invention est de proposer un procédé de grenaillage de têtes d'aube qui permette de créer des précontraintes reproductibles à l'identique sur toutes les aubes et dans un temps de grenaillage plus court.

Un autre but de l'invention est de proposer un procédé de grenaillage de têtes d'aube qui suppriment les opérations de bouchage et débouchage des orifices de passage d'air de refroidissement respectivement avant et après l'opération de grenaillage.

L'invention atteint son but par le fait que l'on réalise le grenaillage au moyen d'un brouillard de billes conformément au procédé de la revendication 1.

Avantageusement, les billes ont un diamètre compris entre 0,8 et 5 mm.

Du fait que les billes ont un diamètre supérieur à celui des orifices de passage d'air de refroidissement, les opérations de bouchage et débouchage de ces orifices deviennent inutiles, et leur énergie cinématique permet de diminuer le temps de grenaillage.

En outre, les billes du brouillard de billes se déplaçant dans des directions aléatoires viennent frapper les surfaces de la tête d'aube sous des angles variés, ce qui améliore l'état de la surface par rapport aux billes projetées par une buse dans une direction privilégiée, et ce d'autant plus que les billes utilisées dans le procédé selon l'invention ont un diamètre plus grand que le diamètre des billes susceptibles d'être projetées par une buse.

Enfin, toutes les surfaces externes de la tête d'aube exposées dans l'enceinte sont soumises en même temps aux impacts des billes, ce qui diminue considérablement les risques de déformation de la tête d'aube.

L'invention concerne également un outillage pour la mise en oeuvre du procédé selon la revendication 4.

L'invention concerne également un procédé de réparation des aubes selon la revendication 5.

D'autres caractéristiques et avantages de l'invention ressortiront à la lecture de la description suivante faite à titre d'exemple et en référence aux dessins annexés dans lesquels :
- la figure 1 est une vue en perspective d'une aube refroidie de turbine de turboréacteur ;
- la figure 2 est une vue de dessus d'un outillage support d'aubes pour la mise en oeuvre du procédé selon l'invention ;
- la figure 3 est une vue en coupe selon la ligne III-III de la figure 2 de l'outillage support d'aubes coiffant la surface active d'une sonotrode; et
- la figure 4 est une vue en perspective d'une plaque de support sur laquelle est montée deux aubes.

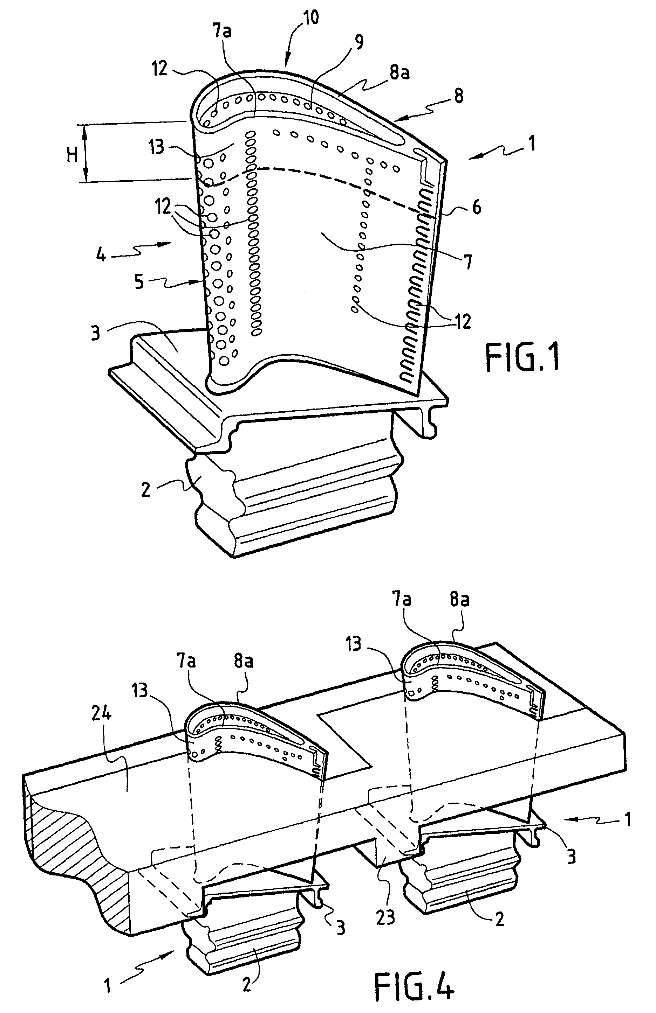

La figure 1 montre une aube 1 refroidie de turbine de turboréacteur, par exemple, qui comporte un pied 2 destiné à la fixation de ladite aube 1 dans une rainure ménagée dans la paroi périphérique d'une roue de turbine, une plate-forme 3 surmontant le pied d'aube 2 délimitant intérieurement la veine de gaz de combustion qui s'écoule de la chambre de combustion et une pale 4 de forme aérodynamique qui s'étend à partir de la plate-forme et qui présente en amont, dans le sens de l'écoulement des gaz de combustion, un bord d'attaque 5 et en aval un bord de fuite, ce bord d'attaque 5 et ce bord de fuite 6 étant reliés de manière connue par un intrados 7 et un extrados 8. La pale 4 est obturée à son extrémité externe ou sommet par une paroi 9 disposée en dessous des extrémités externes 7a, 8a de l'intrados 7 et de l'extrados 8. Ces extrémités externes délimitent avec la paroi 9 une cavité 10, et assurent avec le carter du stator l'étanchéité de la veine extérieure de gaz de combustion.

L'aube 1 est creuse et comporte un circuit interne d'air de refroidissement alimenté par des orifices de grande dimension 11 ménagés dans le pied d'aube 2. Des orifices 12 de passage d'air de refroidissement sont ménagés dans le bord d'attaque 5, le bord de fuite 6, l'intrados 7, l'extrados 8 et la paroi de sommet 9. Ces orifices 12 peuvent être circulaires ou sous forme de fentes. Dans le cas d'orifices 9 circulaires, leur diamètre est au plus égal à 1 mm et dans le cas de fentes, leur dimension transversale est au plus égale à 1 mm.

Le but de l'invention est de proposer un procédé pour mettre en précontrainte de compression la zone d'extrémité externe 13 de la pale 4 qui s'étend par exemple sur une hauteur H de 10 mm, et qui comporte la paroi 9 délimitant la cavité 10, et les portions externes du bord d'attaque 5, du bord de fuite 6, de l'intrados 7 et de l'extrados 8.

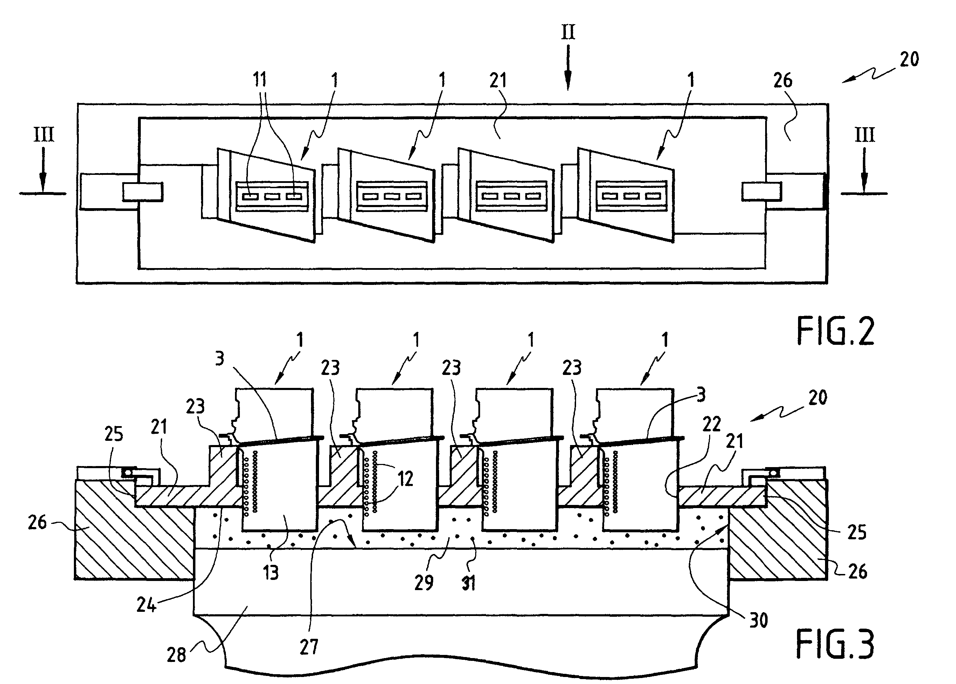

Les figures 2 et 3 montrent un exemple d'outillage 20 utilisé pour la mise en oeuvre du procédé.

L'outillage 20 comporte essentiellement une plaque de support 21 de plusieurs aubes 1. Cette plaque 21 présente des orifices traversant 22, dont la section est sensiblement conforme à la section de l'extrémité d'une pale 4, et sur l'une de ses faces des appuis 23 pour les plates-formes 3, étudiés de telle manière que, lorsqu'une extrémité de pale est introduite dans un orifice 22, et que la plate-forme 3 de l'aube correspondante 1 repose sur un appui 23, la zone d'extrémité externe 13 de ladite aube 1 émerge sur la face 24 de la plaque de support 21 opposée aux appuis 23.

La plaque de support 21 qui a une forme globalement rectangulaire est destinée à être fixée dans une feuillure 25 formée sur une face d'un cadre 26 dont l'épaisseur est supérieure à la hauteur H de la zone d'extrémité externe 13 des aubes 1 portées par la plaque de support 21.

Le cadre 26, équipé de la plaque de support 21 vient coiffer la surface vibrante 27 d'une sonotrode 28 excitée par des moyens de production d'oscillations ultrasonores non montrés sur les dessins. La plaque vibrante 27 est disposée en regard de la plaque de support 21 et à faible distance des extrémités externes des pales 4 d'aube. La plaque vibrante 27 constitue la paroi active d'une enceinte 29 délimitée par la paroi interne 30 du cadre 26 et par la face 24 de la plaque de support 21.

Des billes 31 ayant un diamètre supérieur au diamètre des orifices 12 de passage d'air de refroidissement des aubes 1, et typiquement compris entre 0,8 et 5 mm, sont introduites dans l'enceinte 29. Le jeu existant entre la paroi interne 30 du cadre 26 et la périphérie de la surface vibrante 27 est inférieur au diamètre d'une bille. Les billes 31 ne peuvent ainsi s'échapper de l'enceinte 29.

Lorsque la plaque vibrante est soumise à des oscillations ultrasonores, il se crée un brouillard de billes dans l'enceinte 29. Les billes 31 rebondissent sur la paroi interne 30 du cadre 26 et la face 24 de la plaque de support 21. Les parois des zones d'extrémité externe 13 des aubes 1 sont ainsi frappées par une pluralité de billes.

La fréquence des ondes ultrasonores, les dimensions de la surface vibrante 27 de la sonotrode 28 et du cadre 26, et l'énergie acoustique sont calculées de telle manière que les zones d'extrémité 13 des aubes soient grenaillées de manière homogène et dans un temps de grenaillage très court.

## Revendications

1. Procédé de traitement de surface et de mise en précontrainte de compression par grenaillage des sommets (9) et des parois aérodynamiques (7, 8) de têtes d'aubes (1) refroidies comportant une cavité (10) dans leurs sommets, lesdites aubes (1) étant creuses et comportant un circuit interne de refroidissement communiquant avec l'extérieur par des orifices de passage (12) d'air de refroidissement ménagés notamment dans lesdits sommets (9) et lesdites parois aérodynamiques (7, 8), le grenaillage s'effectuant en frappant lesdits sommets (9) et lesdites parois aérodynamiques (7, 8) par une pluralité de billes,
**caractérisé par le fait que** l'on réalise le grenaillage au moyen d'un brouillard de billes (31) créé dans une enceinte (29) étanche renfermant au moins une tête d'aube (1), ledit brouillard étant créé par la surface active (27) d'une sonotrode (28) excitée par des moyens de production d'oscillations ultrasonores et délimitant une partie de ladite enceinte (29), et **par le fait que** l'on utilise des billes (31) ayant un diamètre supérieur à celui des orifices de passage d'air de refroidissement.

2. Procédé selon la revendication 1, **caractérisé par le fait que** les billes (31 ) ont un diamètre compris entre 0,8 et 5 mm.

3. Procédé selon la revendication 2, **caractérisé par le fait que** l'enceinte (29) renferme plusieurs têtes d'aubes (1).

4. Outillage pour la mise en oeuvre du procédé selon l'une quelconque des revendications 1 à 3, **caractérisé par le fait qu'**il comporte une plaque de support (21) d'aube présentant au moins un orifice traversant (22) dont la section est conforme à la section de l'extrémité (13) d'une pale d'aube (4), un cadre (26) sur une face duquel la plaque de support (21) est susceptible d'être fixée et une surface sonotrode (28) dont la plaque vibrante (27) est coiffée par ledit cadre et disposée en regard de ladite plaque de support (21).

5. Procédé de réparation d'une aube dans lequel on recharge de métal par soudure les zones ébréchées de l'aube et on procède à un usinage pour reconstituer la forme de l'aube, **caractérisé par le fait qu'**après l'usinage on applique le procédé de traitement de surface selon l'une quelconque des revendications 1 à 3, afin d'empêcher l'apparition de fissures au niveau de soudures lors des traitements thermiques ultérieurs et lors de l'exploitation de ladite aube.

## Patentansprüche

1. Verfahren zur Oberflächenbehandlung und zur Erzeugung einer Kompressionsvorspannung durch Kugelstrahlen der Spitzen (9) und der aerodynamischen Wände (7, 8) von gekühlten Schaufelköpfen (1), die in ihren Spitzen einen Hohlraum (10) aufweisen, wobei die Schaufeln (1) hohl sind und einen inneren Kühlkreislauf besitzen, der über Durchgangsöffnungen (12) für Kühlluft, die insbesondere in den Spitzen (9) und den aerodynamischen Wänden (7, 8) angebracht sind, mit dem Außenraum in Verbindung steht, wobei das Kugelstrahlen durchgeführt wird, indem eine Vielzahl von Kugeln gegen die genannten Spitzen (8) und die genannten aerodynamischen Wänden (7, 8) geschleudert wird,
**dadurch gekennzeichnet,**
**daß** das Kugelstrahlen mit Hilfe eines Nebels von Kugeln (31) durchgeführt wird, der in einem dichten Schutzbehälter (29) erzeugt wird, der wenigstens einen Schaufelkopf (1) umschließt, wobei dieser Nebel von der aktiven Fläche (27) einer Sonotrode (28) erzeugt wird, die durch Mittel zur Erzeugung von Ultraschallschwingungen angeregt wird und wenigstens einen Teil des genannten Schutzbehälters (29) begrenzt,
und **daß** man Kugeln (31) verwendet, deren Durchmesser größer ist als der Durchmesser der Durchgangsöffnungen für die Kühlluft.

2. Verfahren nach Anspruch 1, **dadurch gekennzeichnet, daß** die Kugeln (31) einen Durchmesser zwischen 0,8 mm und 5 mm haben.

3. Verfahren nach Anspruch 2, **dadurch gekennzeichnet, daß** der Schutzbehälter (29) mehrere Schaufelköpfe (1) umschließt.

4. Werkzeugausrüstung für die Durchführung des Verfahrens nach einem der Ansprüche 1 bis 3, **dadurch gekennzeichnet, daß** sie aufweist: eine Schaufel-Trägerplatte (21) mit wenigstens einer durchgehenden Öffnung (22), deren Querschnitt dem Querschnitt des Endbereichs (13) eines Schaufelblatts (4) entspricht, einem Rahmen (26), auf dessen einer Seite die Trägerplatte (21) fixierbar ist, und einer Fläche der Sonotrode (28), deren Schwingungsplatte (27) von dem Rahmen überdeckt wird und die der Trägerplatte (21) gegenüberliegend angeordnet ist.

5. Verfahren zum Reparieren einer Schaufel, bei dem man durch Schweißen Metall auf die angegriffenen Zonen der Schaufel aufträgt und eine materialabtragende Bearbeitung vornimmt, um die Form der Schaufel wiederherzustellen, **dadurch gekennzeichnet, daß** man pach der materialabtragenden Bearbeitung das Verfahren zur Oberflächenbehandlung nach einem der Ansprüche 1 bis 3 durchführt, um zu verhindern, daß bei den weiteren thermischen Behandlungen und bei der Benutzung der Schaufel im Bereich der Schweißstellen Risse auftreten.

## Claims

1. Method for the surface treatment and compressive prestressing by peening of the tops (9) and aerodynamic surfaces (7,8) of cooled blade tips (1) comprising a cavity (10) in their tops, the said blades (1) being hollow and having an internal cooling circuit communicating with the outside via cooling air passage orifices (12) formed in particular in the said tops (9) and the said aerodynamic surfaces (7,8), peening being carried out by striking the said tops (9) and the said aerodynamic surfaces (7,8) with a plurality of beads,
**characterized in that** peening is performed by means of a mist of beads (31) created in a sealed chamber (29) containing at least one blade tip (1), the said mist being created by the active surface (27) of a sonotrode (28) excited by means of producing ultrasonic oscillations and delimiting part of the said chamber (29), and **in that** use is made of beads (31) which have a diameter greater than that of the cooling air passage orifices.

2. Method according to Claim 1, **characterized in that** the beads (31) have a diameter of between 0.8 and 5 mm.

3. Method according to Claim 2, **characterized in that** the chamber (29) contains several blade tips (1).

4. Tooling for implementing the method according to any one of Claims 1 to 3, **characterized in that** it comprises a blade support plate (21) having at least one through-orifice (22), the cross section of which matches the cross section of the end (13) of a blade aerofoil (4), a frame (26), on one face of which the support plate (21) can be fixed, and a sonotrode surface (28), the vibrating plate (27) of which is capped by the said frame and arranged facing the said support plate (21).

5. Method for repairing a blade in which the uneven regions of the blade are built up with weld metal and machined to reconstitute the shape of the blade, **characterized in that**, after machining, the surface treatment method according to any one of Claims 1 to 3 is applied so as to prevent the appearance of cracks at the welds during subsequent heat treatments and when the said blade is in use.
